# EUROPÄISCHE PATENTSCHRIFT

(11) **EP 1 911 625 B1**
(45) Veröffentlichungstag und Bekanntmachung des Hinweises auf die Patenterteilung: **05.01.2011**
(21) Anmeldenummer: 07016401.7
(22) Anmeldetag: 22.08.2007
(51) Int. Cl.: B60P 7/08

(54) **Sicherungsmittel für Schüttgutbehälter**
Safety devices for bulk goods containers
Moyen de sécurisation pour conteneur de matières en vrac

(30) Priorität: 13.10.2006 DE 202006015899 U
(43) Veröffentlichungstag der Anmeldung: 16.04.2008
(73) Patentinhaber: Westdeutscher Drahtseil-Verkauf Dolezych GmbH & Co., 44147 Dortmund (DE)
(72) Erfinder: Schöbel, Uwe, 58730 Fröndenberg (DE)
(74) Vertreter: Nunnenkamp, Jörg

(56) Entgegenhaltungen:
- DE-B- 1 290 878
- DE-U1-202005 002 419
- US-A- 5 784 761
- US-A1- 2005 180 835

## Beschreibung

Die Erfindung betrifft die Kombination aus einem Sicherungsmittel und wenigstens einem Schüttgutbehälter aus Karton, Pappe oder Kunststoff.

Schüttgutbehälter und hier insbesondere Oktabins sind Aufnahmebehälter für Schüttgüter, die allgemein aus Pappe oder auch aus Kunststoff hergestellt werden können. Bei den Schüttgütern handelt es sich im Allgemeinen um Granulate, die überwiegend in der chemischen Industrie eingesetzt werden. Aus diesem Grund sind die fraglichen Schüttgutbehälter aus Pappe in der Regel auf ihrer Innenseite mit einer Folie ausgerüstet. Das Befüllen der Schüttgutbehälter erfolgt mit Hilfe von Trichtereinrichtungen, während für das Entleeren in der Regel mit Saugschläuchen oder Kippvorrichtungen gearbeitet wird. Beispiele solcher Oktabins werden in der DE 20 2005 009 362 U1 oder auch der DE 10 2004 015 014 A1 vorgestellt.

Die mit den Schüttgütern gefüllten Schüttgutbehälter bzw. Oktabins werden in der Regel mit Hilfe von LKWs oder per Zug transportiert, um die darin befindlichen Schüttgüter respektive Granulate weiterzuverarbeiten. Da das Schüttgut üblicherweise riesel- und fließfähig ist, können sich Probleme im Fahrbetrieb beim Auftreten bestimmter fahrdynamischer Vorgänge, insbesondere bei Kurvenfahrt und beim Bremsen, ergeben. So hat man u. a. hohe Reaktionskräfte der Granulate bei Bremsmanövern beobachtet, die in Anbetracht des erheblichen Gewichtes der Ladung von unter Umständen mehr als 20 t das Fahrverhalten äußerst negativ beeinflussen können und im Extremfall sogar Unfälle begünstigen.

Folgerichtig besteht ein Bedürfnis dahingehend, die Schüttgutbehälter auf einer Ladefläche zu sichern. Hier gibt es in der Praxis bereits Ansätze dahingehend, die Schüttgutbehälter mit einer kopfseitigen Sicherungsplane festzulegen. Entsprechende Versuche verliefen jedoch enttäuschend, weil die Schüttgutbehälter aus insbesondere Karton nicht niederzurrfähig sind. D. h., die fragliche Sicherungsplane konnte nicht an der Ladefläche niedergezurrt werden und wenn, dann sind die Schüttgutbehälter meistens beschädigt worden bzw. sind nicht in der Lage, die Niederzurrkräfte aufzunehmen.

Das gilt auch für ein Sicherungsmittel entsprechend dem zuvor geschilderten Aufbau, wie es in der US 5 784 761 beschrieben wird. Denn dort setzt sich die Sicherungsfläche zwar aus einer Bauchbinde und einer Kopfschlinge zusammen und sind auch Losenden realisiert. Das gesamte Sicherungsmittel dient jedoch dazu, nicht näher spezifizierte gestapelte Kartons oder dergleichen auf einer Palette festzulegen. Lösungsansätze für die zuvor herausgearbeiteten Probleme lassen sich hieraus schon deshalb nicht ableiten, weil immer eine Palette erforderlich ist und das Sicherungsmittel bzw. die Anordnung der gestapelten Kartons auf der Ladefläche offen bleibt.

Sofern schließlich noch die US 2005/0180835 A1 betrachtet wird fällt auf, dass in Längsrichtung einer Transportfläche angeordnete Losenden fehlen. Dadurch lassen sich große fahrdynamische Kräfte kaum beherrschen.

Der Erfindung liegt das technische Problem zugrunde, eine derartige Kombination aus einem Sicherungsmittel und wenigstens einem Schüttgutbehälter so weiter zu entwickeln, dass eine einwandfreie Ladungssicherung gelingt.

Zur Lösung dieser technischen Problemstellung ist Gegenstand der Erfindung die Kombination aus einem Sicherungsmittel und wenigstens einem Schüttgutbehälter aus Karton, Pappe oder Kunststoff, wie sie im Anspruch 1 beschrieben wird.

Im Rahmen der Erfindung werden die Schüttgutbehälter durch die Sicherungsfläche also nicht nur kopfseitig übergriffen, sondern gleichzeitig umfangsseitig umgriffen und so fixiert. Dabei kann das erfindungsgemäße Sicherungsmittel bereits bei nur einem (einzigen) Schüttgutbehälter zum Einsatz kommen. Üblicherweise ist die Sicherungsfläche jedoch so ausgelegt, dass sie zwei oder mehr Schüttgutbehälter gemeinsam übergreift. Dadurch werden die beiden oder die mehreren Schüttgutbehälter gegenseitig und gegeneinander fixiert.

Insgesamt hat es sich bewährt, wenn die Sicherungsfläche aus zumindest zwei Bestandteilen zusammengesetzt ist, nämlich wenigstens einer Bauchbinde und zumindest einer Kopfschlinge. Die Bauchbinde sorgt dafür, dass die beiden oder mehreren Schüttgutbehälter umfangseitig gegeneinander gesichert sind. Dagegen stellt die Kopfschlinge sicher, dass die Schüttgutbehälter kopfseitig eine Fixierung erfahren. Gleichzeitig wird mit Hilfe der Kopfschlinge gewährleistet, dass ein üblicherweise kopfseitig des Schüttgutbehälters vorgesehener Deckel fixiert ist und nicht unkontrolliert umhervagabundiert.

Allgemein sind die Bauchbinde und die Kopfschlinge der Sicherungsfläche als Gurtbänder ausgebildet. Dabei hat es sich bewährt, wenn als Gurtbänder gewebte oder gewirkte Bänder aus Kunststoff zum Einsatz kommen, beispielsweise solche aus Polyesterfasern. Üblicherweise haben sich an dieser Stelle Festigkeiten der Gurtbänder als günstig erwiesen, die beispielsweise zu Belastungswerten von ca. 2.000 bis 2.500 daN (dekaNewton) korrespondieren. Das hängt natürlich von den speziellen Einsatzbedingungen ab.

Damit die in der Regel aus Karton bzw. einer Kartonage gefertigten Schüttgutbehälter nicht beschädigt werden, haben sich Gurtbandbreiten von ca. 100 mm und mehr bewährt. D. h., die Bauchbinde und/oder die Kopfschlinge sind vorteilhaft als Breitbandgurtbänder ausgeführt. Auf diese Weise wird eine geringe Flächenpressung zur Verfügung gestellt, die die Kartonage nicht unnötig belastet. Außerdem empfiehlt es sich, wenn die Bauchbinde im Allgemeinen in einer Höhe umfangsseitig um den Schüttgutbehälter bzw. die mehreren Schüttgutbehälter herumgelegt wird, die in etwa der Schwerpunkthöhe entspricht. Dadurch wird zuverlässig verhindert, dass der jeweilige Schüttgutbehälter oberhalb der Bauchbinde im Kopfbereich abknickt oder abknicken kann.

Es hat sich bewährt, wenn die Kopfschlinge über einen Deckelbereich des einen oder der mehreren Schüttgutbehälter geführt ist. Außerdem verbindet die Kopfschlinge üblicherweise zwei sich im Wesentlichen gegenüberliegende Anschlusspunkte an der Bauchbinde. Dabei sind die Bauchbinde und die Kopfschlinge im Allgemeinen miteinander vernäht. Es können aber auch andere Verbindungsmaßnahmen gewählt werden. Außerdem liegt es im Rahmen der Erfindung, die Kopfschlinge und/oder die Bauchbinde längenveränderlich auszugestalten, indem diese beispielsweise mit wenigstens einem Klemmschloss zur Längenvariation ausgerüstet werden. Um jedoch etwaige Beschädigungen des Schüttgutbehälters durch das Klemmschloss zu vermeiden, kann prinzipiell auch mit längenveränderbaren Klettverbindern oder gänzlich ohne Längenveränderbarkeit gearbeitet werden. Hierbei reicht es regelmäßig aus, wenn die Bauchbinde den oder die Schüttgutbehälter auf wenigstens einem Teilumfang umfasst.

Die Bauchbinde und die Kopfschlinge sind im Allgemeinen rechtwinklig miteinander verbunden. Sie beschreiben im Raum in etwa einen liegenden Viertelzylinder bzw. ein Viertelprisma und sind folglich optimal an die Raumform der Schüttgutbehälter angepasst. Denn die Schüttgutbehälter verfügen größtenteils über einen achteckigen Querschnitt bzw. eine genormte Grundfläche und unterscheiden sich lediglich hinsichtlich ihrer Behälterhöhe. Aus diesem Grund kann ein und dasselbe erfindungsgemäße Sicherungsmittel universell eingesetzt werden. Dies umso mehr, als unterschiedliche Höhen der Schüttgutbehälter durch eine Längenvariation der Kopfschlinge beherrscht werden können, wobei dann immer noch sichergestellt ist, dass sich die Bauchbinde in etwa in Schwerpunkthöhe befindet.

Um das Sicherungsmittel und folglich die mit Hilfe des Sicherungsmittels gehaltenen Schüttgutbehälter einwandfrei mit der zugehörigen Ladefläche zu verbinden, verfügen die Kopfschlinge und/oder die Bauchbinde zumindest über ein Losende zur Fixierung an einem Zurrpunkt der Ladefläche. Dieses wenigstens eine Losende kann beispielsweise in einen Gurtspanner eingeschlauft werden, wie er nicht einschränkend in der DE 196 52 109 C2 beschrieben wird. Ähnliche Vorgehensweisen sind Gegenstand der DE 199 15 514 C1, wo geeignete Losenden-Spannvorrichtungen zur längenvariablen Festlegung der Sicherungsfläche an der Ladefläche vorgestellt werden.

Selbstverständlich kann das an das Sicherungsmittel angeschlossene Losende auch mit einem Haken oder einer vergleichbaren Anschlussvorrichtung ausgerüstet werden, um unmittelbar in einen Zurrpunkt auf der Ladefläche oder einen anderen mit der Ladefläche verbundenen Gurt eingehakt zu werden. Meistens sind zwei Losenden realisiert, die jeweils an die Kopfschlinge bzw. die Bauchbinde sich jeweils gegenüberliegend angeschlossen sind, um Haltekräfte von der Ladefläche primär in die Bauchbinde einzuleiten. Dies aus der Erkenntnis heraus, dass die fraglichen Schüttgutbehälter - wie bereits dargelegt - nicht niederzurrfähig sind, folglich die Kopfschlinge nicht oder nur kaum mit Niederzurrkräften belastet werden darf.

Dabei hat es sich bewährt, wenn das jeweilige Losende unter einem Schrägwinkel von ca. 20° bis 60°, insbesondere 25° bis 35°, gegenüber der Ladefläche, mit der Kopfschlinge und/oder der Bauchbinde verbunden ist. Ferner wird man aus Gründen der Materialersparnis die Kopfschlinge im Bereich von Seitenflächen der Schüttgutbehälter und/oder im Deckelbereich der Schüttgutbehälter meistens nicht durchgängig über die gesamte Länge mit einer Breite von ca. 100 mm und mehr ausführen. Tatsächlich haben sich hier (an der Seitenfläche und/oder im Deckelbereich) zwei beabstandet zueinander verlaufende Hosenträgergurte als günstig erwiesen, welche an den Seitenflächen in den flachen Breitbandgurt übergehen. Denn im Bereich der Seitenwände und/oder im Deckelbereich des Schüttgutbehälters werden überwiegend Längskräfte auf den Schüttgutbehälter aufgebracht, die zu keiner oder nur einer geringen Flächenpressung des Schüttgutbehälters an den Seitenwänden und im Deckelbereich korrespondieren. Dadurch sind Maßnahmen zur Reduzierung der Flächenpressung an diesen Stellen nicht erforderlich.

Im Ergebnis wird ein Sicherungsmittel für Schüttgutbehälter vorgestellt bzw. die Verwendung eines an sich bekannten Sicherungsmittels zur Ladungssicherung von Schüttgutbehältern angesprochen. Dabei kommt als Sicherungsmittel für den fraglichen oder die mehreren Schüttgutbehälter ein solches zur Anwendung, welches den betreffenden Schüttgutbehälter oder die mehreren Schüttgutbehälter mit seiner Sicherungsfläche umfangseitig umgreift und gleichzeitig kopfseitig übergreift. Auf diese Weise werden die im Zuge der Sicherung auftretenden Kräfte hauptsächlich auf den Umfang der Schüttgutbehälter und weniger den Deckelbereich verteilt.

Weil zur Realisierung der zumindest einen Bauchbinde und der wenigstens einen Kopfschlinge jeweils flache Breitbandgurte mit einer Breite von überwiegend 100 mm oder mehr zum Einsatz kommen, ist die Flächenpressung umfangsseitig und/oder deckelseitig gering, so dass Beschädigungen der meistens aus Karton gefertigten Schüttgutbehälter, insbesondere der Oktabins, nahezu ausgeschlossen werden können.

Eine einfache Montage des Sicherungsmittels wird zudem dadurch erreicht, dass die Bauchbinde den oder die Schüttgutbehälter lediglich hinsichtlich eines Teilumfangs umgreift. Meistens wird man eine in etwa hälftige Umgreifung in Bezug auf den Gesamtumfang präferieren. Dadurch kann das Sicherungsmittel einfach angelegt und wieder entfernt werden. Zusätzlich zu dieser einen Sicherungsfläche lässt sich selbstverständlich eine weitere Sicherungsfläche realisieren. Auch ein ergänzendes Gurtband ist zur Kombination denkbar.

Schließlich empfiehlt die Erfindung, den oder die Schüttgutbehälter so auf einer Ladefläche eines Kraftfahrzeuges oder eines Eisenbahnwagons anzuordnen, dass ihre jeweilige Kopfschlinge quer zur Fahrtrichtung verläuft. Dagegen sind das eine oder die mehreren Losenden in Fahrtrichtung oder entgegen der Fahrtrichtung angeordnet. Auf diese Weise werden insbesondere Bremskräfte (und möglicherweise auch Beschleunigungskräfte) von den gleichgerichteten Losenden aufgenommen und über die beiden sich gegenüberliegenden Anschlusspunkte in die Bauchbinde eingeleitet. Da sich die Bauchbinde darüber hinaus in Schwerpunkthöhe des Schüttgutbehälters befindet, wird diese Krafteinleitung vergleichmäßigt und werden insbesondere Verformungen der Schüttgutbehälter vermieden.

Im Gegensatz zum Stand der Technik nach der DE 94 00 733 U1, welche eine Palette zum Tragen von Schüttgutbehältern beschreibt und in diesem Zusammenhang ein Abgleiten von der Oberseite der Palette verhindern will, wird ein wiederverwendbares und gleichzeitig kostengünstig aufgebautes Sicherungsmittel zur Verfügung gestellt, das weder an bestimmte Erfordernisse der Ladefläche noch vorgegebene Paletten angepasst ist oder angepasst werden muss. Denn es können handelsübliche Paletten, beispielsweise Europaletten, für den Transport der Schüttgutbehälter eingesetzt werden, auf denen die Schüttgutbehälter auf der Ladefläche ruhen. Durch das spezielle Sicherungsmittel wird eine einwandfreie Fixierung der Schüttgutbehälter bzw. Oktabins auf der Ladefläche erreicht, und zwar ungeachtet der Abmessungen der Ladefläche und/oder der Ausgestaltung der die Schüttgutbehälter jeweils aufnehmenden Palette.

Dabei versteht es sich zusätzlich, dass die Schüttgutbehälter nicht notwendigerweise auf einer oder mehreren Paletten ruhen müssen. Ebenso liegt es im Rahmen der Erfindung, zwischen beispielsweise der Palette und dem Boden des fraglichen Schüttgutbehälters reibwertvermindernde Unterlagen zwischenzuschalten. Hier haben sich beispielsweise rutschhemmende Gummimatten mit einem Mindestgleitreibbeiwert von µ ≥ 0,5 bewährt. Hierin sind die wesentlichen Vorteile zu sehen.

Im Folgenden wird die Erfindung anhand einer lediglich ein Ausführungsbeispiel darstellenden Zeichnung näher erläutert; Es zeigen:
- Fig. 1: das erfindungsgemäße Sicherungsmittel perspektivisch,
- Fig. 2: eine Aufsicht auf den Gegenstand nach Fig. 1 und
- Fig. 3: des Sicherungsmittel im Einsatz zur Ladungssicherung auf einem Kraftfahrzeug.

In den Figuren ist ein Sicherungsmittel 1, 2 dargestellt, welches im Rahmen des Ausführungsbeispiels zur Ladungssicherung von Schüttgutbehältern 3, insbesondere Oktabins 3, eingesetzt wird. Bei diesen Oktabins 3 handelt es sich um Schüttgutbehälter 3 mit achteckiger Grundfläche, die üblicherweise aus Karton gefertigt sind und einen kopfseitigen Deckel 3' aufweisen. Mit Hilfe der Schüttgutbehälter bzw. Oktabins 3 werden in der Regel Granulate für die chemische Industrie transportiert, wobei in gewissen Grenzen auch Gefahrgüter im Innern aufgenommen werden können.

Das Sicherungsmittel 1, 2 zeichnet sich durch eine Sicherungsfläche aus, welche den jeweiligen Schüttgutbehälter 3 umfangseitig umgreift und kopfseitig übergreift. Man erkennt, dass sich das Sicherungsmittel 1, 2 bzw. die hierdurch definierte Sicherungsfläche aus wenigstens einer Kopfschlinge 1 und einer Bauchbinde 2 zusammensetzt. Sowohl die Kopfschlinge 1 als auch die Bauchbinde 2 sind im Rahmen des Ausführungsbeispiels als flache Breitbandgurte bzw. Breitbandgurtbänder ausgeführt, also Gurte mit einer Breite B von ca. 100 mm oder mehr und einer Stärke von wenigen Millimetern. Bei den Gurten bzw. Gurtbändern handelt es sich um solche aus Kunststofffasern, insbesondere Polyesterfasern, die miteinander verwebt oder verwirkt sind.

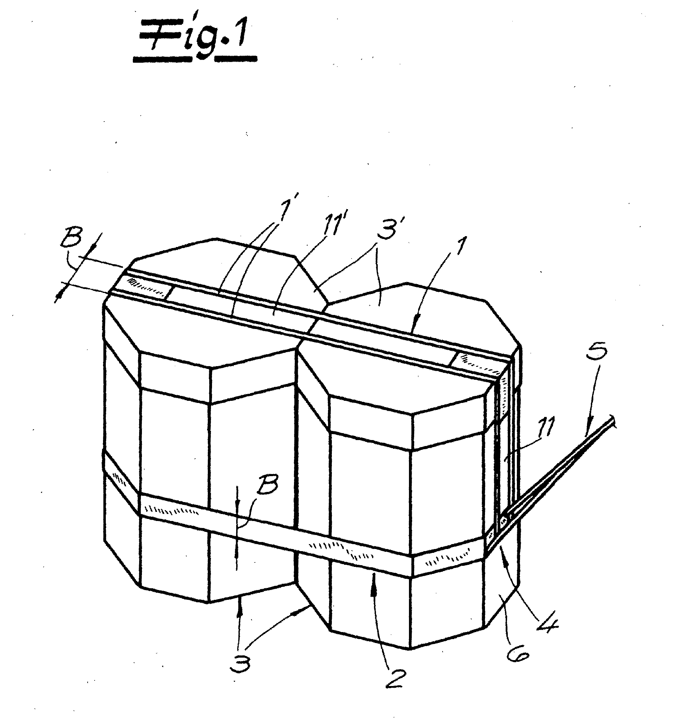

Die Sicherungsfläche bzw. das Sicherungsmittel 1, 2 übergreift bei dem Beispiel nach den Fig. 1 bis 3 jeweils zwei Schüttgutbehälter 3. Es könnten aber auch drei Schüttgutbehälter 3 oder auch vier Schüttgutbehälter 3 mit Hilfe des Sicherungsmittels 1, 2 zusammengefasst werden.

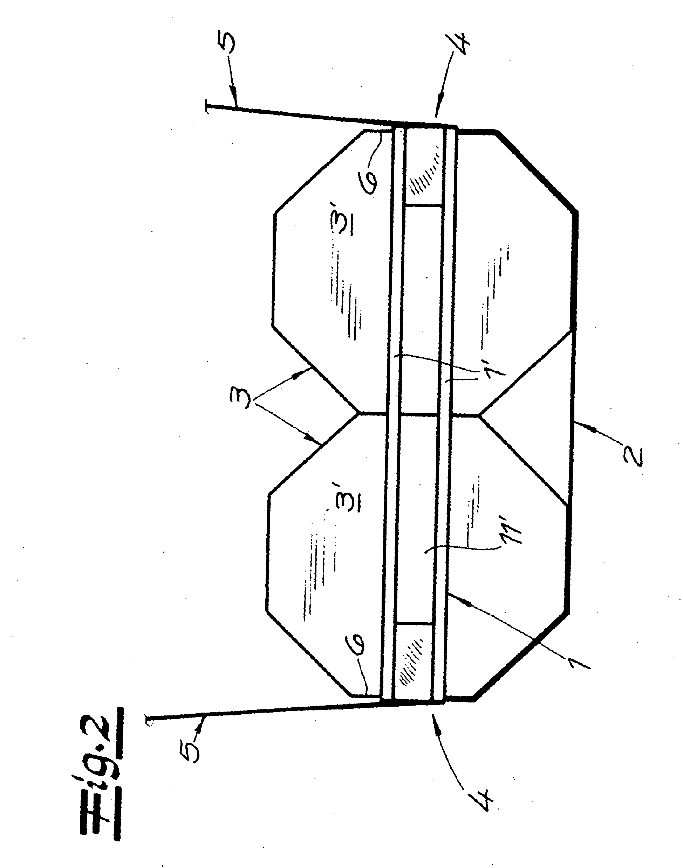

Anhand der Aufsicht gemäß Fig. 2 erkennt man, dass die Bauchbinde 2 die Schüttgutbehälter 3 im Hinblick auf einen Teilumfang umfasst. Tatsächlich umgreift die Bauchbinde 2 das Aggregat aus den beiden Schüttgutbehältern 3 im Wesentlichen über die Hälfte des Gesamtumfangs, und zwar von einem Anschlusspunkt 4 für die Kopfschlinge 1 bis hin zum gegenüberliegenden Anschlusspunkt 4. Tatsächlich ist die Kopfschlinge 1 jeweils in den beiden sich gegenüberliegenden Anschlusspunkten 4 mit der Bauchbinde 2 vernäht oder sonst wie mit dieser - auch lösbar - verbunden.

Die Kopfschlinge 1 ist jeweils über einen Deckelbereich des jeweiligen Schüttgutbehälters 3 geführt. Tatsächlich übergreift die Kopfschlinge 1 den Schüttgutbehälter 3 in Seitenansicht U-förmig in einer vertikalen Ebene und ist hierbei jeweils mittig über den zugehörigen Deckel 3' des jeweiligen Schüttgutbehälters 3 geführt. Auch die Bauchbinde 2 umgreift den Schüttgutbehälter 3 bzw. die beiden Schüttgutbehälter 3 U-förmig, allerdings in einer horizontalen Ebene bzw. in Aufsicht. Hierdurch sind die Kopfschlinge 1 und die Bauchbinde 2 in ihren jeweiligen Anschlusspunkten 4 angenähert rechtwinklig miteinander verbunden und beschreiben räumlich in etwa einen liegenden Viertelzylinder bzw. einen liegenden Viertelquader respektive ein liegendes Viertelprisma.

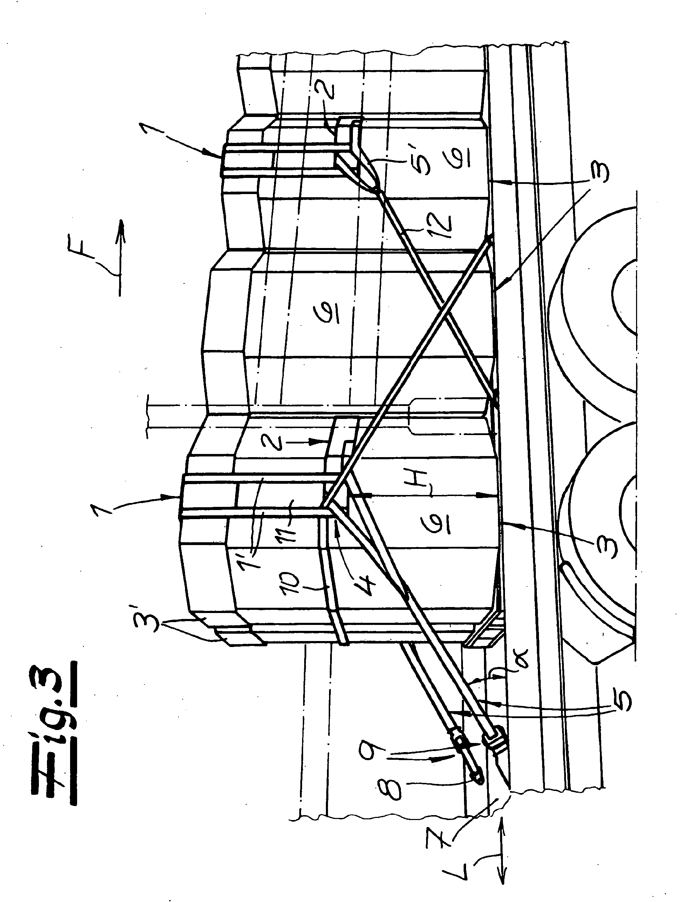

In den Fig. 1 und 2 ist jeweils ein Losende 5 dargestellt, welches an die Bauchbinde 2 angeschlossen ist. Tatsächlich sind bei dieser Variante zwei Losenden 5 realisiert, welche mit jeweils zwei in Längsrichtung L einer Ladefläche 7 verlaufenden Seitenwänden 6 des Schüttgutbehälters 3 bzw. der dort anliegende Bauchbinde 2 verbunden sind. Diese Ausgestaltung findet sich auch bei den hinteren beiden Schüttgutbehältern 3 auf einer Ladefläche 7 eines in Fig. 3 dargestellten Kraftfahrzeuges. Zusätzlich sind hier bei einem davor befindlichen Paar an Schüttgutbehältern 3 zwei Losenden 5' bzw. eine Schlaufe aus den beiden Losenden 5' verwirklicht. In die beiden Losenden 5' bzw. die Schlaufe ist ein Haken eingehängt, der Bestandteil eines Abspanngurtes 12 ist, der wiederum an die Ladefläche 7 angeschlossen ist.

Man erkennt, dass die jeweiligen Losenden 5 respektive 5' gegenüber der lediglich angedeuteten Ladefläche 7 einen Schrägwinkel α von ca. 20° bis 60° einschließen. Im Ausführungsbeispiel wird ein Winkel für den Schrägwinekl α von ca. 25° bis 35° abgedeckt. Dabei werden die Schüttgutbehälter 3 auf der Ladefläche 7 jeweils so angeordnet, dass die Kopfschlinge 1 des Sicherungsmittels 1, 2 quer zu der fraglichen Längsrichtung L angeordnet ist, so dass insbesondere mit Bremsungen verbundene Kräfte unmittelbar über die Losenden 5, 5' in die Bauchbinde 2 eingeleitet werden.

Dagegen verläuft die Kopfschlinge 1 quer zur Längsrichtung L, muss folglich allenfalls Kippbewegungen des Schüttgutbehälters 3 abfangen. Folgerichtig werden fahrdynamische Kräfte primär in die Bauchbinde 2 eingeleitet und in dieser vergleichmäßigt. Dadurch, dass die Bauchbinde 2 in Schwerpunkthöhe H des Schüttgutbehälters 3 inklusive Schüttung angeordnet ist, treten Kippmomente lediglich durch die sich ggf. verändernde Schütthöhe auf und lassen sich beherrschen.

Zur Verbindungen der Losenden 5 mit Zurrpunkten 8 auf der Ladefläche 7 können jeweils Ratschen 9 eingesetzt werden, wie sie in den einleitend beschriebenen Dokumenten erläutert sind und eine lediglich schematische Darstellung erfahren haben. Anhand der Fig. 3 wird deutlich, dass das Sicherungsmittel 1, 2 mit einem zusätzlichen Gurtband 10 kombiniert werden kann. Dieses Gurtband 10 ist jeweils durch Ösen 11 der Kopfschlinge 1 geführt. Neben diesen Ösen 11 verfügt die Kopfschlinge 1 deckelseitig noch über eine weitere Öse bzw. Aussparung 11'. Beide Aussparungen bzw. Ösen 11, 11' der Kopfschlinge 1 stellen sich dadurch ein, dass die Kopfschlinge 1 im Bereich der Seitenwände 6 sowie deckelseitig des Schüttgutbehälters 3 als lediglich zwei Hosenträgergurte 1' ausgebildet ist. Hierdurch wird eine Materialersparnis in diesem Bereich (nämlich der Seitenwände 6 und/oder im Deckelbereich) erreicht, in dem die Flächenpressung der Kopfschlinge 1 gering ist bzw. gegen Null tendiert.

Man erkennt, dass die Losenden 5, 5' jeweils in Fahrtrichtung F geneigt angeordnet sind. Dagegen wird das zusätzliche Gurtband 10 gegen die Fahrtrichtung F geneigt mit der Ladefläche 7 verbunden. Außerdem wird anhand der Fig. 3 deutlich, dass beispielsweise jedes zweite Paar an Schüttgutbehältern 3 in Längsrichtung L auf der Ladefläche 7 mit dem beschriebenen Sicherungsmittel 1, 2 ausgerüstet ist. Dabei ist das Sicherungsmittel 1, 2 jeweils so an die Schüttgutbehälter 3 angelegt, dass die Bauchbinde 2 den in Fahrtrichtung F gesehen jeweils vorderen Teil bzw. Halbumfang umgreift.

Bei der Beladung der Transportfläche 7 wird im Allgemeinen so vorgegangen, dass die Schüttgutbehälter 3, insbesondere Oktabins 3, wenn möglich formschlüssig zur Stirnwand und/oder den Seitenwänden auf der Ladefläche 7 angeordnet sind. Ladelücken sind zu vermeiden bzw. können durch Platzhalter aufgefüllt werden. Hierbei mag es sich grundsätzlich um Paletten handeln, die selbstverständlich gegenüber der Ladefläche 7 zu sichern sind. Das kann mit herkömmlichen Zurrgurten geschehen.

## Patentansprüche

1. Kombination aus einem Sicherungsmittel (1, 2) und wenigstens einem Schüttgutbehälter (3) aus Karton, Pappe oder Kunststoff, wobei
- sich das Sicherungsmittel (1, 2) durch eine den Schüttgutbehälter (3) umfangseitig um- und kopfseitig übergreifende Sicherungsfläche zur Ladungssicherung auf einer Ladefläche (7) eines Fahrzeuges auszeichnet, wobei sich ferner
- die Sicherungsfläche aus zumindest einer Bauchbinde (2) und einer Kopfschlinge (1) zusammensetzt, welche jeweils als Breitbandgurtbänder mit einer Breite von 100 mm und mehr ausgebildet sind und
- die Bauchbinde (2) den oder die schüttgutbehälter (3) an deren in Fahrtrichtung (F) gesehen jeweils vorderen Teil in Bezug auf den Gesamtumfang in etwa hälftig umgreift,
- und zwar von einem Anschlusspunkt (4) für die Kopfschlinge (1) bis zum gegenüberliegenden Anschlusspunkt (4), so dass
- die Kopfschlinge (2) über einen Deckelbereich des oder der Schüttgutbehälter (3) geführt ist und die zwei sich gegenüberliegenden Anschlusspunkte (4) an der Bauchbinde (2) miteinander verbindet, wobei
- die Kopfschlinge (2) im Bereich von Seitenwänden (6) sowie deckelseitig des Schüttgutbehälters (3) als lediglich zwei beabstandete Hosenträgergurte (1') mit dazwischen befindlichen Aussparungen (11, 11') ausgebildet ist und
- zwei Losenden zur jeweiligen Fixierung an einem Zurrpunkt (8) auf der Ladefläche (7) realisiert sind, jeweils sich gegenüberliegend an die Bauchbinde (2) angeschlossen sind, um Haltekräfte von der Ladefläche (7) primär in die Bauchbinde (2) einzuleiten, und wobei
- der Schüttgutbehälter (3) so auf der Ladefläche (7) angeordnet ist, dass seine Kopfschlinge (7) quer zur Fahrtrichtung (Längsrichtung L) und die beiden Losenden (5) in Fahrtrichtung (Längsrichtung L) ausgerichtet sind.

2. Kombination nach Anspruch 1, **dadurch gekennzeichnet, dass** die Sicherungsfläche zwei oder mehr Schüttgutbehälter (3) gemeinsam übergreift.

3. Kombination nach 1 oder 2, **dadurch gekennzeichnet, dass** die Bauchbinde (2) und die Kopfschlinge (1) angenähert rechtwinklig miteinander verbunden sind und räumlich in etwa ein liegendes viertel Prisma beschreiben.

4. Kombination nach einem der Ansprüche 1 bis 3, **dadurch gekennzeichnet, dass** das jeweilige Losende (8) unter einem Schrägwinkel (α) von ca. 20° bis 60°, insbesondere 30° bis 40°, an die Bauchbinde (2) angeschlossen ist.

5. Kombination nach einem der Ansprüche 1 bis 4, **dadurch gekennzeichnet, dass** zwei oder mehrere Sicherungsflächen realisiert sind und/oder die jeweilige Sicherungsfläche mit einem zusätzlichen Gurtband (10) kombiniert wird.

## Claims

1. A combination of a securing means (1, 2) and at least one bulk material container (3) of cardboard, paperboard or plastic, wherein
- the securing means (1, 2) are **characterized by** a securing surface that circumferentially encompasses and overlaps the top side of the bulk material container (3) in order to secure the load on a cargo area (7) of a vehicle, wherein
- the securing surface furthermore is composed of at least one fiber belt (2) and a noose (1) that are respectively realized in the form of a wide belt band with a width of 100 mm and more and
- the fiber belt (2) encompasses approximately half of the bulk material container or bulk material containers (3) referred to the overall circumference on their respective front section referred to the driving direction (F),
- namely from one connecting point (4) for the noose (1) to an opposite connecting point (4) such that
- the noose (2) is guided over a lid region of the bulk material container or bulk material containers (3) and connects the two opposite connecting points (4) on the fiber belt (2) to one another, wherein
- the noose (2) is merely realized in the form of two spaced-apart suspender belts (1') with recesses (11, 11') situated in between in the region of sidewalls (6), as well as on the lid side of the bulk material container (3), and
- two loose ends are realized in order to be respectively fixed on a lashing point (8) on the cargo area (7) and respectively connected to the fiber belt (2) on opposite sides in order to introduce holding forces from the cargo area (7) primarily into the fiber belt (2), and wherein
- the bulk material container (3) is arranged on the cargo area (7) in such a way that its noose (7) is oriented transverse to the driving direction (longitudinal direction L) and the two loose ends (5) are oriented in the driving direction (longitudinal direction L).

2. The combination according to Claim 1, **characterized in that** the securing surface jointly overlaps two or more bulk material containers (3).

3. The combination according to Claim 1 or 2, **characterized in that** the fiber belt (2) and the noose (1) are connected to one another about perpendicularly and spatially describe approximately a quarter-prism in a horizontal position.

4. The combination according to one of Claims 1 to 3, **characterized in that** the respective loose end (8) is connected to the fiber belt (2) at an angle (α) of approximately 20° to 60°, particularly 30° to 40°.

5. The combination according to one of Claims 1 to 4, **characterized in that** two or more securing surfaces are realized and/or the respective securing surface is combined with an additional belt band (10).

## Revendications

1. Combinaison d'un moyen de sécurité (1, 2) et d'au moins un réservoir de produit en vrac (3) en carton, papier ou matière plastique,
- le moyen de sécurité (1, 2) se distinguant par une surface de sécurité entourant le réservoir de produit en vrac (3) sur son volume et son sommet pour sécuriser le chargement sur une surface de chargement (7) d'un véhicule,
- la surface de sécurité se composant en outre d'au moins un lien ventral (2) et d'une boucle de tête (1) qui sont réalisés respectivement sous forme de sangles larges d'une largeur de 100 mm et plus et
- le lien ventral (2) entourant le ou les réservoirs de produit en vrac (3) respectivement sur leur partie avant, vu dans le sens de circulation (F), à peu près à moitié par rapport au volume total,
- et ce d'un point de raccordement (4) pour la boucle de tête (1) au point de raccordement opposé (4), de sorte que
- la boucle de tête (2) est guidée au dessus d'une partie couvercle du ou des réservoirs de produit en vrac (3) et relie entre eux les deux points de raccordement se faisant face (4) au niveau du lien ventral (2),
- la boucle de tête (2) étant, au niveau des parois latérales (6) et au niveau du couvercle du réservoir de produit en vrac (3), réalisée simplement sous forme de deux sangles à bretelles espacées (1') entre lesquelles se trouvent des échancrures (11, 11') et
- deux extrémités lâches à fixer respectivement à un point d'amarrage (8) sur la surface de chargement (7) étant réalisées et raccordées respectivement face à face au lien ventral (2) afin de conduire les forces de retenue de la surface de chargement (7) en premier lieu dans le lien ventral (2) et
- le réservoir de produit en vrac (3) étant disposé sur la surface de chargement (7) de manière à ce que sa boucle de tête (7) soit orientée transversalement par rapport au sens de circulation (sens longitudinal L) et les deux extrémités lâches (5) dans le sens de circulation (sens longitudinal L).

2. Combinaison selon la revendication 1, **caractérisée en ce que** la surface de sécurité recouvre ensemble deux réservoirs de produit en vrac (3) ou davantage.

3. Combinaison selon la revendication 1 ou 2, **caractérisée en ce que** le lien ventral (2) et la boucle de tête (1) sont reliés entre eux de manière approximativement orthogonale et circonscrivent à peu près un quart de prisme à plat dans l'espace.

4. Combinaison selon une des revendications 1 à 3, **caractérisée en ce que** l'extrémité lâche respective (8) se raccorde au lien ventral (2) suivant un angle oblique (α) d'environ 20° à 50°, notamment 30° à 40°.

5. Combinaison selon une des revendications 1 à 4, **caractérisée en ce que** deux ou plusieurs surfaces de sécurité sont réalisées et/ou que la surface de sécurité respective est combinée avec une sangle supplémentaire (10).
